# EUROPÄISCHE PATENTSCHRIFT

(11) **EP 0 418 495 B1**
(45) Veröffentlichungstag und Bekanntmachung des Hinweises auf die Patenterteilung: **21.12.1994**
(21) Anmeldenummer: 90113904.8
(22) Anmeldetag: 20.07.1990
(51) Int. Cl.: B60C 23/04, B60C 23/20

(54) **Einrichtung zur Reifendrucküberwachung**
Tyre pressure control apparatus
Installation de surveillance de la pression d'un pneumatique

(30) Priorität: 14.09.1989 DE 3930813
(43) Veröffentlichungstag der Anmeldung: 27.03.1991
(73) Patentinhaber: WABCO GmbH, 30453 Hannover (DE)
(72) Erfinder: Reinecke, Erich, W-3167 Burgdorf (DE)
(74) Vertreter: Schrödter, Manfred, Dipl.-Ing.

(56) Entgegenhaltungen:
- EP-A- 0 045 401
- EP-A- 0 187 694
- EP-A- 0 374 770
- WO-A-89/11402
- DE-A- 2 813 058
- FR-A- 2 622 289
- US-A- 3 828 149

## Beschreibung

Die Erfindung betrifft eine Einrichtung zur Reifendruck-Überwachung mit einem ein reifendruckabhängiges Signal abgebenden Druckmeßglied und einer bei Unterschreiten eines Reifendruck-Grenzwertes von dem Signal des Druckmeßgliedes betätigten Auswerteeinrichtung sowie mit einem das Signal des Druckmeßgliedes temperaturabhängig korrigierenden Korrekturglied gemäß dem Oberbegriff des Patentanspruchs 1.

Eine derartige Einrichtung ist aus der EP-0 248 821 B bekannt. Diese ist mit Anschluß an den Reifeninnenraum in dem Felgenbett angeordnet. Ihr Druckmeßglied und ihr dessen Signal temperaturabhängig korrigierendes Korrekturglied sind baulich vereinigt. Dies ergibt sich aus der Ausbildung des Druckmeßgliedes als Druckmeßdose, die als Signal einen druckabhängigen Hub abgibt. Als Auswerteeinrichtung weist die bekannte Einrichtung einen den Hub der Druckmeßdose als Signal des Druckmeßgliedes erfassenden magnetischen Wegsensor auf. Der bekannten Einrichtung liegt der Gedanke zugrunde, daß durch den direkten Kontakt zwischen der Reifenluft und dem Druckmeßglied das in diesem eingeschlossene Referenzvolumen die Reifenlufttemperatur annimmt und sich der Druck des Referenzvolumens und damit auch das Signal des Druckmeßgliedes mit dieser Temperatur ändern, im Ergebnis also eine durch die Reifenlufttemperatur bedingte Verfälschung des Reifendruck-Grenzwertes ausgeschlossen wird.

Die Temperatur und damit der Druck des Referenzvolumens hängen nicht nur von der Reifenlufttemperatur sondern auch von dem Wärmestrom aus dem Felgenbett in die Einrichtung ab. Dieser Wärmestrom und die dadurch hervorgerufene Temperaturerhöhung der Einrichtung können beträchtlich sein, da die Felge, insbesondere das Felgenbett, von der innerhalb der Felge eingebauten Bremseinrichtung infolge von Bremsbetätigungen stark aufgeheizt wird. Es hat sich gezeigt, daß das Signal des Druckmeßgliedes infolge dieses Temperatureinflusses derart (über)korrigiert werden kann, daß die Auswerteeinrichtung fälschlich betätigt und - je nach Art der Nutzbarmachung ihrer Betätigung - falsche Reifendruck-Informationen und/oder einen falschen Reifendruck-Regelvorgang auslöst.

Zur Behebung dieses Nachteils ist es bekannt, die Einrichtung zur Reifendruck-Überwachung durch Zwischenlagen aus wärmedämmendem Material und ähnliche Maßnahmen gegen den Wärmestrom aus dem Felgenbett zu isolieren. Diese Maßnahmen sind jedoch aufwendig.

Aus der EP 0 045 401 A1 ist ein Verfahren bekannt, bei dem der Reifendruck elektronisch gemessen wird und der Meßwert elektronisch mit einem Faktor multipliziert wird, der von der Umgebungstemperatur abhängt, wobei der Faktor durch einen der Umgebungstemperatur ausgesetzten temperaturabhängigen Widerstand gegeben wird. Hierbei handelt es sich jedoch um ein elektronisches Kompensationsverfahren im Rahmen eines elektronischen Übertragungsverfahrens für veränderliche Meßwerte von Fahrzeugrädern, bei dem von einer fahrzeugfesten Primärspule Energie auf eine konzentrisch am Rad angeordnete Sekundärspule übertragen und von dieser Sekundärspule ein vom Meßwert abhängiges Informationssignal auf eine fahrzeugfeste Empfangsspule rückübertragen werden.

Aus der nicht vorveröffentlichten EP-0 374 770 A1 ist eine Einrichtung zur Bestimmung der effektiven Lufttemperatur in mindestens einem Fahrzeug-Luftreifen bekannt, bei der zusätzlich zur Temperatur in der Nähe der Felgeninnenseite des betreffenden Fahrzeugrades die Temperatur in unmittelbarer Umgebung einer Fahrzeugbremsscheibe bzw. -trommel sowie die Temperatur in unmittelbarer Umgebung des Fahrzeugs gemessen werden und bei der die effektive Lufttemperatur im betreffenden Fahrzeugluftreifen aus den gemessenen Werten für die Temperatur in der Nähe der Felgeninnenseite, für die Temperatur in unmittelbarer Umgebung einer Fahrzeugbremsscheibe bzw. -trommel und für die Temperatur in umittelbarer Umgebung des Fahrzeugs rechnerisch ermittelt wird. Es handelt sich also hier um eine Einrichtung, bei der eine Berechnungseinheit aus verschiedenen Temperatursensoren die effektive Lufttemperatur rechnerisch ermittelt.

Der Erfindung liegt die Aufgabe zugrunde, eine Einrichtung der eingangs genannten Art mit einfachen Mitteln so zu verbessern, daß sie der Gefahr von Fehlbetätigungen ihrer Auswerteeinrichtung infolge von Temperatureinflüssen seitens der Felge nicht ausgesetzt ist.

Die Erfindung vermeidet auch die mit der Verwendung wärmedämmenden Materials einhergehende Gefahr von Betriebsstörungen aufgrund von Ausfallerscheinungen desselben.

Der Einbauort "Felgenbett" ist, insbesondere wegen der Anordnung der Bremseinrichtung in der Felge, schwer zugänglich. Die Erfindung bietet den Vorteil, daß die Korrektureinrichtung an besser zugänglicher Stelle angeordnet sein und dadurch leichter repariert und gewartet werden kann. Dieser Vorteil ist insbesondere bei Nutzfahrzeugen erheblich, bei denen die Unzugänglichkeit des erwähnten Einbauortes durch die üblichen Zwillingsräder noch verschlechtert wird. In den Ausgestaltungen, in denen das Druckmeßglied und das Korrekturglied baulich vereinigt sind, ergibt sich der weitere Vorteil, daß auch sowohl das Druckmeßglied als auch die gesamte Einrichtung einschließlich der Auswerteeinrichtung an besser zugänglicher Stelle angeordnet sein können.

Die Erfindung löst sich von der herrschenden Auffassung, wonach es unerläßlich ist, die temperaturabhängige Korrektur des Signals des Druckmeßglieds nach der Reifenlufttemperatur vorzunehmen. Die Reifenlufttemperatur ist eine resultierende Temperatur aus der Umgebungstemperatur und einer auf der betriebsmäßigen Reifenerwärmung beruhenden Komponente. Letztere ist je nach der Reifenbauart und der davon abhängigen Walkarbeit des Reifens unterschiedlich groß. Nutzfahrzeugreifen, bei denen es weniger auf Laufkomfort ankommt, sind in der Regel relativ steif ausgeführt und erbringen deshalb relativ geringe Walkarbeit und darauf beruhende Erhöhung der Reifenlufttemperatur. Die Erfindung vernachlässigt die zuletzt erwähnte und erläuterte Komponente und nimmt die Korrektur des Signals des Druckmeßgliedes nach der Umgebungstemperatur vor. Wird der zur Betätigung der Auswerteeinrichtung erforderliche Reifendruck-Abfall als Ansprechschwelle der Einrichtung bezeichnet, so bleibt diese Ansprechschwelle im Stand der Technik über den gesamten Bereich der auftretenden Reifenlufttemperatur etwa gleich. Demgegenüber verändert sich bei der Erfindung die Ansprechschwelle bei höheren Reifenlufttemperaturen. Dies hat den Vorteil, daß die Erfindung im Vergleich zum Stand der Technik weniger empfindlich reagiert und das Erkennen echter Reifendruckfehler erleichtert.

Im Verlauf einer Betriebspause tritt ein völliger Temperaturausgleich zwischen Umgebungstemperatur und Reifenlufttemperatur ein. Nach dem Temperaturausgleich ist auch das Signal des Druckmeßgliedes einer gemäß der herrschenden Auffassung ausgebildeten Einrichtung nach der Umgebungstemperatur korrigiert. Daraus folgt, daß in dem wichtigen Betriebsfall "Fahrtantritt nach einer Betriebspause" die Ansprechschwellen der Erfindung und der bekannten Einrichtung gleich sind und damit auch die Empflindlichkeit gleich ist.

Weitere Vorteile der Erfindung werden in deren nunmehr folgender Erläuterung anhand von in Zeichnungen dargestellten Ausführungsbeispielen genannt. Unter durchgehender Verwendung strichpunktierter Linien für elektrische Verbindungen und durchgehender Linien für Druckverbindungen sowie gleicher Bezugszeichen für Elemente mit gleichen Funktionen zeigen:
- **Fig.1**: schematisch eine Einrichtung zur Reifendruck-Überwachung,
- **Fig.2**: schematisch eine andere Ausgestaltung der Einrichtung nach Fig.1,
- **Fig.3**: schematisch eine weitere Ausgestaltung der Einrichtung zur Reifendruck-Überwachung.

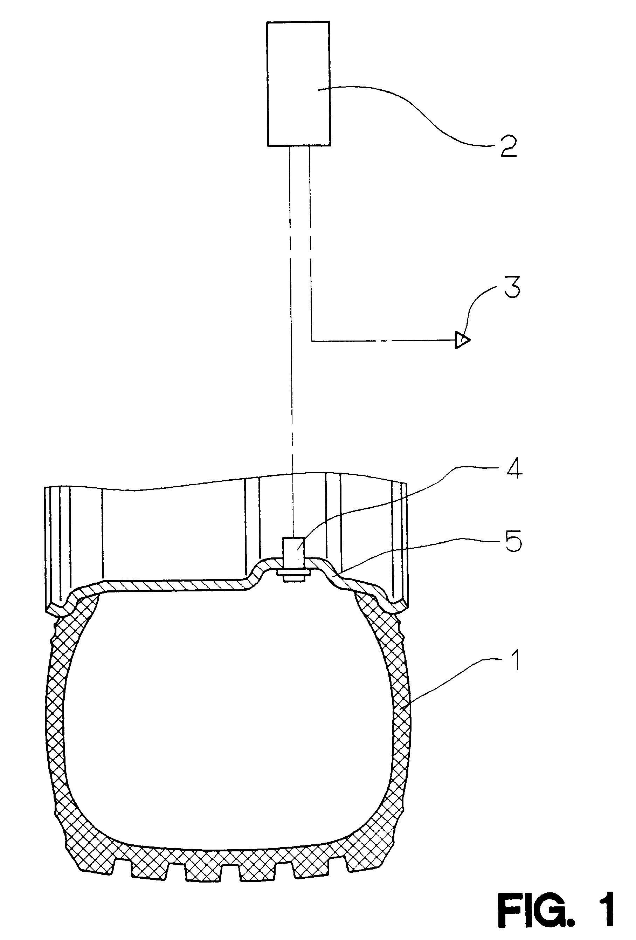

Bei der in Fig.1 dargestellten Einrichtung zur Reifendruck-Überwachung ist ein Druckmeßglied (4) in oder an einem einen Reifen (1) aufnehmenden Felgenbett (5) mit Anschluß an den Reifeninnenraum angeordnet.

Das Druckmeßglied (4) ist vorzugsweise temperaturunempfindlich, etwa ein Piezo-Druckaufnehmer. Sein reifendruckabhängiges Signal wird einer Elektronik (2) zugeführt. Außerdem ist ein die Umgebungstemperatur erfassender Temperatursensor (3) vorgesehen, dessen temperaturabhängiges Signal ebenfalls der Elektronik (2) zugeführt wird.

Die Elektronik (2) ist zugleich als Signalaufbereitungsanlage und Auswerteeinrichtung der Einrichtung zur Reifendruck-Überwachung ausgebildet. In ihrer Eigenschaft als Signalaufbereitungsanlage nimmt sie, gegebenenfalls neben anderen Aufbereitungsmaßnahmen, eine Korrektur des Signals des Druckmeßgliedes (4) nach dem Signal des Temperatursensors (3) vor. Sie bildet insofern mit dem Temperatursensor (3) ein das Signal des Druckmeßgliedes (4) temperaturabhängig korrigierendes Korrekturglied (2, 3).

In ihrer Eigenschaft als Auswerteeinrichtung ist die Elektronik (2) so ausgebildet, daß sie auf eine oder mehrere bekannten Arten auf das temperaturabhängig korrigierte Signal des Druckmeßglieds (4) reagiert, also von diesem betätigt wird, wenn dieses Signal einen eingespeicherten Reifendruck-Grenzwert unterschreitet.

Die Betätigung der Elektronik (2) kann auf jede geeignete Art, z.B. zum Schalten eines Warnkreises und/oder zum Steuern einer Reifendruck-Regelanlage, genutzt werden.

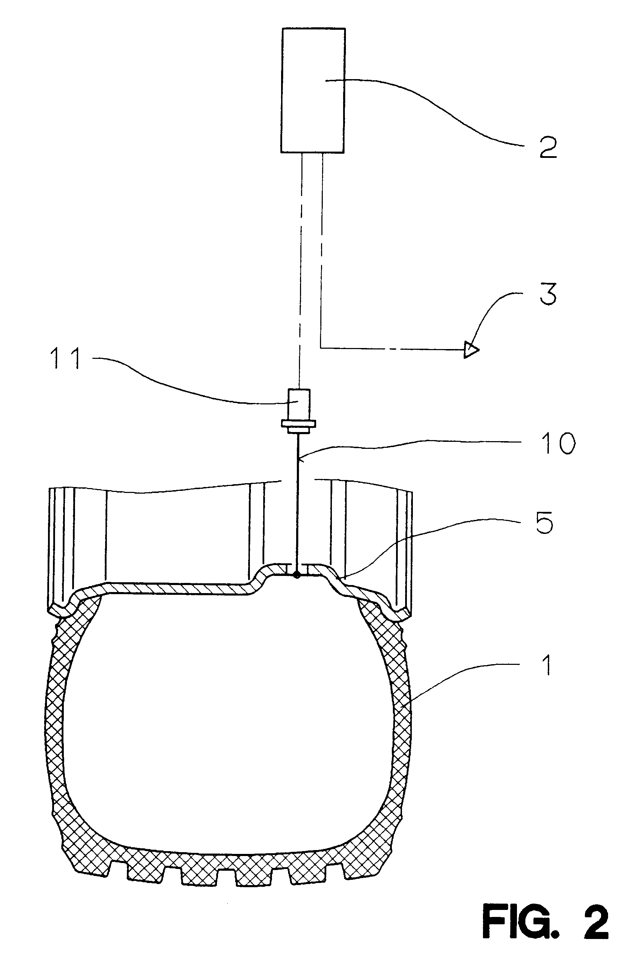

In Fig.2 ist ein von dem Felgenbett (5) entfernt angeordnetes Druckmeßglied (11) vorgesehen, dem der Reifendruck über einen nicht näher bezeichneten Durchbruch in dem Felgenbett (5) und eine daran angeschlossene Druckleitung (10) zugeführt wird. Das Druckmeßglied (11) kann mit dem Druckmeßglied (4) der Fig.1 funktionell identisch sein, aber auch nach jedem anderen geeigneten Prinzip arbeiten.

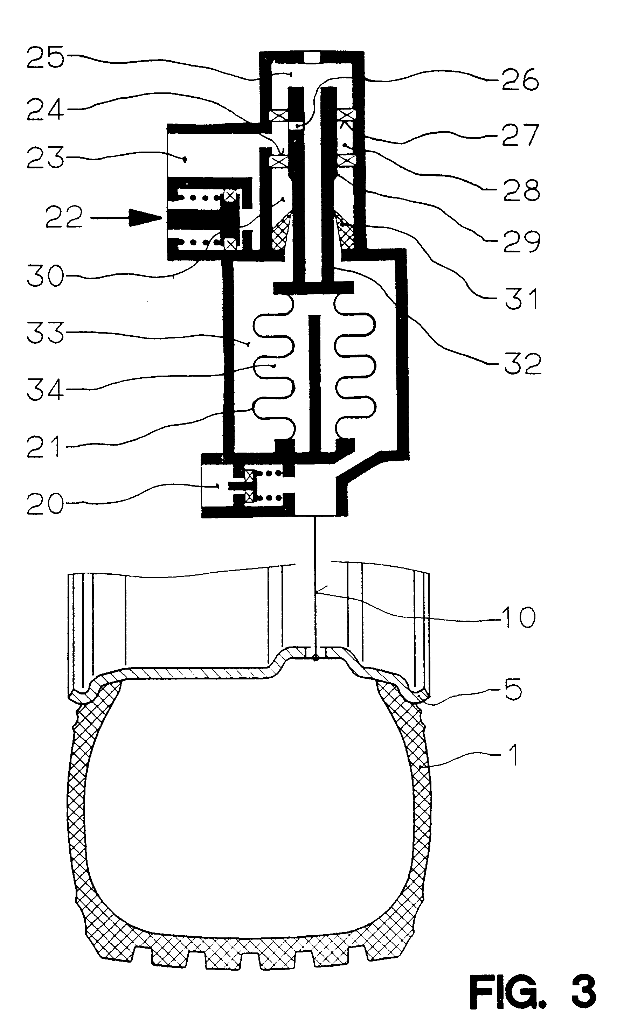

Bei der in Fig.3 dargestellten Einrichtung zur Reifendruck-Überwachung sind das Druckmeßglied, das Korrekturglied und die Auswerteeinrichtung in einem nicht näher bezeichneten Gehäuse zusammengefaßt und mit diesem insgesamt von dem Felgenbett (5) entfernt angeordnet.

Das Druckmeßglied und das Korrekturglied sind bei diesem Ausführungsbeispiel in Gestalt einer Druckmeßdose (21, 34) baulich vereinigt.

Die Druckmeßdose (21, 34) ist in einer ersten Gehäusekammer (33) angeordnet, der über die bereits erwähnte Druckleitung (10) der Reifendruck zugeführt wird. Die Druckmeßdose (21, 34) stützt sich an ihrem einen Ende im Gehäuse ab und ist an ihrem gegenüberliegenden Ende mit einem Ventilschieber (32) verbunden, der, ausgehend von der ersten Gehäusekammer (33), eine zweite Gehäusekammer (30) und eine dritte Gehäusekammer (28) durchdringt und in eine Umgebungskammer (25) eindringt. Die Umgebungskammer (25) ist über einen nicht näher bezeichneten Durchbruch mit der Umgebung verbunden, während an die dritte Gehäusekammer (28) ein Signalausgang (23) angeschlossen ist.

Der Ventilschieber (32) weist eine Steuerkante (29) und eine Steuerbohrung (26) auf. Die Steuerkante (29) bildet mit einer Steuerfläche (24) an einer die zweite Gehäusekammer (30) von der dritten Gehäusekammer (28) trennenden Gehäusewand ein erstes Ventil (24, 29). Die Steuerbohrung (26) bildet mit einer Steuerfläche (27) an einer die dritte Gehäusekammer (28) von der Umgebungskammer (25) trennenden Gehäusewand ein zweites Ventil (26, 27). Die Steuerbohrung (26) und die Steuerkante (29) sind am Ventilschieber (32), die Steuerflächen (24) und (27) sind am Gehäuse so angeordnet, daß bei jeweils geschlossenem anderen Ventil über das erste Ventil (24, 29) die zweite Gehäusekammer (30) mit der dritten Gehäusekammer (28) und über das zweite Ventil (26, 27) die dritte Gehäusekammer (28) mit Umgebungskammer (25) verbindbar sind.

Zwischen der ersten Gehäusekammer (33) und der zweiten Gehäusekammer (30) durchdringt der Ventilschieber (32) ein Dichtelement in Lippenbauform, welches ein in Richtung von der ersten Gehäusekammer (33) zur zweiten Gehäusekammer (30) durchgängiges und die Gegenrichtung sperrendes Rückschlagventil (31) bildet.

In der Druckmeßdose (21, 34) ist ein Referenzvolumen (34) aus Luft oder einem anderen Gas unter Druck eingeschlossen.

Ist der Reifen nicht befüllt, entspricht also der Reifendruck dem Umgebungsdruck, so nimmt die Druckmeßdose (21, 34) ihre Grundbaulänge ein. In dieser sind das erste Ventil (24, 29) geöffnet und das zweite Ventil (26, 27) geschlossen.

Wird nun der Reifen befüllt, zu welchem Zweck am Gehäuse ein Reifenfüllanschluß (20) mit einem nicht näher bezeichneten Reifenfüllventil vorgesehen ist, so beaufschlagt der sich in der ersten Gehäusekammer (33) aufbauende Reifendruck über das Rückschlagventil (31) auch die zweite Gehäusekammer (30) und aus dieser über das offene erste Ventil (24, 29) die dritte Gehäusekammer (28) und den Signalausgang (23). Druck am Signalausgang (23) bildet ein Reifendruckfehler-Signal.

Unter der Einwirkung des Reifendrucks verkürzt sich die Baulänge der Druckmeßdose (21, 34) unter Verschiebung des Ventilschiebers (32) in die erste Gehäusekammer (32). Bei einer bestimmten Verkürzung werden das erste Ventil (24, 29) geschlossen und das zweite Ventil (26, 27) geöffnet. Nunmehr ist der Signalausgang (23) über die dritte Gehäusekammer (28) und das offene zweite Ventil (26, 27) mit der Umgebungskammer (25) und damit mit der Umgebung verbunden mit der Folge, daß das Reifendruckfehler-Signal abfällt. Der Reifendruck, bei dem dies geschieht, wird Reifendruck-Grenzwert genannt. Bei weiter steigendem Reifendruck verkürzt sich die Baulänge der Druckmeßdose (21, 34) weiter, ohne daß die zugehörige Verschiebung des Ventilschiebers (32) den Zustand der Ventile (24, 29) bzw. (26, 27) beeinflußt.

Fällt nun der Reifendruck von dem erreichten Wert wieder ab, so vergrößert sich die Baulänge der Druckmeßdose (21, 34) wieder unter Rückverschiebung des Ventilschiebers (32). Fällt der Reifendruck bis auf den erwähnten Reifendruck-Grenzwert ab, so vergrößert sich die Baulänge der Druckmeßdose (21, 34) gerade wieder auf die Grundbaulänge, bei der das erste Ventil (24, 29) geöffnet und das zweite Ventil (26, 27) geschlossen werden. Der Reifendruck tritt nun wieder auf dem oben erwähnten Wege als Reifendruckfehler-Signal bis zum Signalausgang (23) durch.

Aus der vorstehenden Funktionsbeschreibung folgt, daß in allgemeiner Form die Baulängenveränderung der Druckmeßdose (21, 34) als deren reifendruckabhängiges Signal und der Ventilschieber in Verbindung mit den Ventilen (24, 29; 26, 27) als von dem Signal des Druckmeßgliedes (21, 34) betätigte Auswerteeinrichtung bezeichnet werden können.

Der Druck des Referenzvolumens hängt vom Fülldruck und von der Temperatur des Referenzvolumens ab. Mit steigender bzw. fallender Temperatur gegenüber einer angenommenen Normaltemperatur verlängern bzw. verkürzen sich die Grundbaulänge und die betrieblichen Baulängen der Druckmeßdose (21, 34) mit der Folge, daß der Reifendruck-Grenzwert im Vergleich mit einem der Normaltemperatur zugeordneten Wert steigt oder fällt.

Am Einbauort der beschriebenen Einrichtung zur Reifendruck-Überwachung ist das Referenzvolumen (34) der Umgebungstemperatur ausgesetzt. Folglich stellen sich auch die soeben erwähnten Veränderungen des Reifendruck-Grenzwertes abhängig von der Umgebungstemperatur ein. Allgemein ausgedrückt, wird das Signal des Druckmeßgliedes abhängig von der Umgebungstemperatur korrigiert.

Durch das Rückschlagventil (31) ist sichergestellt, daß bei Reifendrücken unterhalb des Reifendruck-Grenzwertes, also auch bei völligem Abfall des Reifendrucks, der einmal zum Signalausgang (23) durchgetretene Reifendruck als Reifendruckfehler-Signal erhalten bleibt.

Das Reifendruckfehler-Signal kann wie die Betätigung der Elektronik (2) der früheren Ausführungsbeispiele genutzt werden.

Mit (22) ist noch eine mechanische Druckmangelanzeige bezeichnet, die von dem zum Signalausgang (23) durchgetretenen Reifendruck betätigt wird.

Im übrigen gelten die zu einem Ausführungsbeispiel gegebenen Erläuterungen, sofern sich aus dem Vorstehenden nichts anderes ergibt, für die anderen Ausführungsbeispiele direkt oder in entsprechender Weise mit.

Der Fachmann erkennt, daß sich der Schutzbereich der Erfindung nicht in den beschriebenen Ausführungsbeispielen erschöpft, sondern alle Ausgestaltungen umfaßt, deren Merkmale sich den Patentansprüchen unterordnen.

## Patentansprüche

1. Einrichtung zur Reifendruck-Überwachung mit einem ein reifendruckabhängiges Signal abgebenden Druckmeßglied (4, 11; 21, 34)
und einer bei Unterschreiten eines Reifendruck-Grenzwertes von dem Signal des Druckmeßgliedes (4; 11; 21, 34) betätigten Auswerteeinrichtung (2; 32, 24, 29, 26, 27)
sowie mit einem das Signal des Druckmeßgliedes (4; 11; 21, 34) temperaturabhängig korrigierenden Korrekturglied (2, 3; 21, 34)
welches der außerhalb des Reifens (1) herrschenden Temperatur ausgesetzt ist,
**dadurch gekennzeichnet,**
daß das Korrekturglied (2, 3; 21, 34) aus einem Element besteht, dessen Länge sich in Abhängigkeit von der Temperatur verändert
und daß die Länge des Elementes (21, 34) als Korrekturgröße dient.

2. Einrichtung nach Anspruch 1, dadurch gekennzeichnet, daß das Druckmeßglied (11; 21, 34) außerhalb des Reifens angeordnet ist.

3. Einrichtung nach Anspruch 2, dadurch gekennzeichnet, daß das Druckmeßglied (21, 34) und das Korrekturglied (21, 34) baulich vereinigt sind.

4. Einrichtung nach einem der Ansprüche 2 oder 3, dadurch gekennzeichnet, daß der Reifendruck der Einrichtung über eine Druckleitung (10) zugeführt wird.

5. Einrichtung nach einem der vorhergehenden Ansprüche, dadurch gekennzeichnet, daß das Druckmeßglied eine Druckmeßdose (21, 34) ist.

## Claims

1. A device for monitoring tyre pressure having a pressure-measuring element (4, 11; 21, 34) producing a tyre pressure-dependent signal,
and an evaluating device (2; 32, 24, 29, 26, 27) actuated when the signal of the pressure-measuring element (4; 11; 21, 34) falls below a tyre pressure limit value
and also a correcting element (2, 3; 21, 34) correcting the signal of the pressure-measuring device (4; 11; 21, 34) in dependence on temperature, which correcting element is exposed to the temperature prevailing outside the tyre (1),
characterized in that
the correcting element (2, 3; 21, 34) consists of an element of which the length changes in dependence on temperature
and the length of the element (21, 34) serves as the correcting variable.

2. A device according to claim 1, characterized in that the pressure-measuring element (11; 21, 34) is arranged outside the tyre.

3. A device according to claim 2, characterized in that the pressure-measuring element (21, 34) and the correcting element (21, 34) are structurally combined.

4. A device according to one of claims 2 and 3, characterized in that the tyre pressure is supplied to the device by way of a pressure line (10).

5. A device according to one of the preceding claims, characterized in that the pressure-measuring element is a pressure-measuring cell (21, 34).

## Revendications

1. Dispositif pour la surveillance de pression d'un pneu comportant un élément de mesure de pression (4, 11 ; 21, 34) délivrant un signal dépendant de la pression du pneu,
et un dispositif d'évaluation (2 ; 32, 24, 29, 26, 27) actionné par le signal de l'élément de mesure de pression (4 ; 11 ; 21, 34) lorsqu'on passe en-dessous d'une valeur limite de pression du pneu,
ainsi qu'un élément de correction (2, 3 ; 21, 34) qui corrige en dépendance de la température le signal de l'élément de mesure de pression (4 ; 11 ; 21, 34) ;
ledit élément de correction étant exposé à la température qui règne à l'extérieur du pneu (1),
caractérisé en ce que l'élément de correction (2, 3 ; 21, 34) est constitué d'un élément dont la longueur se modifie en dépendance de la température,
et en ce que la longueur de l'élément (21, 34) sert de valeur de correction.

2. Dispositif selon la revendication 1, caractérisé en ce que l'élément de mesure de pression (11 ; 21, 34) est agencé à l'extérieur du pneu.

3. Dispositif selon la revendication 2, caractérisé en ce que l'élément de mesure de pression (21, 34) et l'élément de correction (21, 34) sont structurellement unis.

4. Dispositif selon l'une ou l'autre des revendications 2 et 3, caractérisé en ce que la pression du pneu est amenée au dispositif via une conduite de pression (10).

5. Dispositif selon l'une quelconque des revendications précédentes, caractérisé en ce que l'élément de mesure de pression est un boîtier de mesure de pression (21, 34).
